# EUROPEAN PATENT APPLICATION

(11) **EP 2 503 261 A1**
(43) Date of publication of application: **26.09.2012**
(21) Application number: 10831177.0
(22) Date of filing: 19.11.2010
(51) Int. Cl.: F24J 2/46, F24J 2/40, F24J 2/24

(54) **SOLAR COLLECTOR WITH HEAT SINK**

(30) Priority: 19.11.2009 ES 200930678 U; 23.06.2010 US 821327 P
(71) Applicant: Torrens Rasal, José María, 08860 Bellamar - Castelldefels, Barcelona (ES)
(72) Inventor: Torrens Rasal, José María, 08860 Bellamar - Castelldefels, Barcelona (ES)
(74) Representative: Ponti Sales, Adelaida
(86) International application number: PCT/ES2010/000481
(87) International publication number: WO 2011/061368

(57) **Abstract**

Thermal solar collector (I), with heat sink, comprising - an upper pipe (5) and a lower pipe (13) for the heat-transfer fluid, connected by a return pipe (4), - an absorber (18) made up of multiple parallel vertical pipes (12), that connect said lower pipe (13) to said upper pipe (5), and - a heat-sink device (2) fitted with a heat exchanger (3), connected to said upper pipe (5) by means of at least one thermostat bypass valve (15) to said heat-sink device (2), to prevent overheating. The upper pipe (5) for heat-transfer fluid, the heat-sink device (2) and the thermostat bypass valve (15) are contained within a single frame (14), said upper horizontal pipe (5) and said heat-sink device (2) being arranged adjacently. The thermostat valve (15) and the heat exchanger (3) are connected by an inverted siphon (8).

## Description

The present invention relates to a thermal solar collector with a heat sink of the type comprising at least an upper pipe and a lower pipe for the heat-transfer fluid; an absorber made up of multiple parallel vertical pipes that connect said lower pipe to said upper pipe; and a heat-sink device fitted with a heat exchanger connected to said upper pipe by means of at least one thermostat bypass valve to said heat-sink device to prevent overheating. The thermal solar collector with a heat sink of the present invention guarantees a protection against overheating of the thermal fluid in the heat sink, a good functional integration with the remaining part of the installation, and minimizes any risk of incorrect connection at the moment of installation and of physical injury of the users and the installers.

### BACKGROUND OF THE INVENTION

Thermal solar collectors which comprise at least a conduit for heat-transfer fluid, a heat-sink circuit connected to the conduit for heat-transfer fluid by means of a bypass valve, with three or four paths, towards the heat-sink circuit, are known, according to the preamble of independent claim 1.

With this configuration it is possible to avoid the overheating caused by an excessive irradiation in the collector or by the absence of synchronization between the demand for heat and its production, in particular during the summer months, avoiding at the same time the presence of heat circulation pumps and any type of electric devices.

The documents US4473063, EP1666811, ES2272174 and WO09/063117 describe thermal solar collectors of this type.

Although they are functionally correct, the collectors described in the above documents are not quite optimal because they have some of the following disadvantages:
- In the first place, when the heat sink occupies an elevated position which could involve shades on the collectors eventually positioned behind. This results in the need for larger location surface or in the projection of shades on the posterior collectors. In addition, this elevated position makes particularly visible the heat-sink circuits which results in a negative impact.
- Secondly, the connection of the heat-sinks to the heat collection conduit can not be evident for the installer, who could placed it incorrectly or require more installation time with the related costs. In addition, the final esthetic appearance of the conduit becomes very bulky because the heat-sink circuit is added to all systems which usually carry the thermal solar collectors.
- In the third place, the need to make the connection with the collector involves the presence of elements added to the external connections of the collector, which requires, every time when it is necessary to insert a heat-sink circuit, to provide a certain distance between the neighboring collectors with all problems of planning and esthetic impact related to that.
- In the fourth place, when the thermostat valve is installed externally, it is always colder than the fluid of the collector itself, and its delayed reaction usually can not avoid the overheating of the system.

The purpose of the present invention is to provide a comprehensive solution of all abovementioned disadvantages of the current state of the art.

### DESCRIPTION OF THE INVENTION

With this purpose, the object of the present invention is a thermal solar collector of the type indicated at the beginning, with a new concept and functionality, which essentially is characterized in that the upper pipe for the heat-transfer fluid, the heat sink and the thermostat bypass valve are positioned in the same frame, with said upper horizontal pipe and said heat sink positioned adjacently.

This structure solves the first three of the abovementioned disadvantages of the state of the art because:
- By integrating the abovementioned elements within the same frame, the final configuration of the installation can be planned during the design phase. The length of the panel can be made larger in order to house the new circuit, or it can be kept with the standard length, but by reducing the collection surface. In this case, the advantages of the invention, as it will be seen, compensate with excess the absolute reduction of the heat generation.
- The connection is performed in the plant under controlled conditions, so that the quality of the final assembly is not left to the chance. In particular, the installer must continue to make the connections, which he has always made, thus excluding the possibility of an error in the course of mounting the heat-sink circuit.
- The visual impact resulting from adding a component, in this case the heat sink, is eliminated.
- When the thermostat valve is integrated within a frame or a box, there is no distance between the valve and the collector heat source, and as a result the set has a maximum reliability. More specifically, in the abovementioned heat sinks of the state of the art, the valve is outside of the frame and, therefore, has necessarily a certain distance from the heat collection conduit itself, which is the one that is hotter. This distance requires a branch of the piping involving temperature gradients, so that the valve does not capture the temperature of the hottest fluid but a lower temperature that is variable and depends on the working conditions, the length of said branch, the presence or absence of insulation, etc., which could require the placement of a tube for recirculation or "sneaker". Therefore, this disadvantage is eliminated as the presence of this "sneaker" is not necessary.

To resolve the fourth disadvantage, the following is preferred:
- The thermostat valve and the heat exchanger are connected by means of a siphon, in particular an inverted siphon, with the presence of a return pipe which connects said upper pipe with said lower pipe;
- The collector can comprise an insulating sleeve for interrupting the heat transfer by conduction between the heat exchanger and the upper pipe;
- The thermostat valve has four paths and is calibrated to open the way for the heat-transfer fluid towards the heat exchanger when the temperature of the heat-transfer fluid reaches a predetermined minimum value, which is one of the paths connected to the upper end of a vertical pipe; and
- Between the exit of the heat sink and the upper pipe, the thermal solar collector comprises a thermal siphon.

In this way, thanks to the calibration of the valve and the presence of the siphons, any loss of energy in the course of the normal functioning of the collector, due to thermal transfer through convection from the thermostat valve to the heat exchanger, is eliminated. Furthermore, the presence of the return pipe impedes the phenomenon of thermal stratification.

The thermal solar collector can comprise also a deaerator at the highest point of the heat sink.

In an embodiment, the heat-sink device and the thermostat bypass valve are housed in a box which is separated from the rest of the solar collector by a partition wall. Said box can have several openings for ventilation.

The input and output connections for the heat-transfer fluid, which have to be connected to the adjacent collectors, project from the frame.

### BRIEF DESCRIPTION OF THE DRAWINGS

A detailed description is provided here below of the preferred embodiment of the thermal solar collector of the present invention, which, for better understanding, is accompanied by several drawings included simply as an example without limitation, in which:
Figure 1 is a front view of a first embodiment of a thermal solar collector with a heat sink according to the invention;
Figure 2 is a partial elevational view of the embodiment of the thermal solar collector;
Figure 3 is a top perspective view of a thermal solar collector according to the invention;
Figure 4 is a partial enlarged view of the section indicated in Figure 3 by a circle of the thermal solar collector according to the invention;
Figure 5 is a lateral elevational view of an embodiment of a thermal solar collector with a heat sink according to the invention;
Figure 6 is a rear elevational view of an embodiment of a thermal solar collector with a heat sink according to the invention;
Figure 7 is a front elevational view of a second embodiment, as an alternative of the one in Figure 1, of a thermal solar collector with a heat sink according to the invention;
Figure 8 is a top perspective view of a set of thermal solar collectors according to the invention for a climatic region with strong solar radiation;
Figure 9 is a top perspective view of a set of thermal solar collectors according to the invention for a climatic region with medium solar radiation;
Figure 10 is a top perspective view of a set of thermal solar collectors according to the invention for a climatic region with low solar radiation;

### DESCRIPTION OF THE PREFERRED EMBODIMENTS

The appended drawings show two preferred embodiments of the thermal solar collector according to the invention, which is designated by a reference number 1.

In general, the thermal solar collector 1 of the invention comprises an upper pipe 5 and a lower pipe 13 for the heat-transfer fluid, which connect several parallel vertical pipes 12 of any known type, including a vacuum tube, and constitute the absorber 18 which is usual in this type of devices. The thermal solar collector 1 comprises a heat-sink device 2 equipped with heat exchanger 3 connected to said upper pipe 5 by means of at least one thermostat bypass valve 15 towards said heat-sink device 2 in a way that it is possible, when the heat-transfer fluid reaches a threshold temperature, to avoid the overheating by evacuation of the heat by means of said heat-sink device 2.

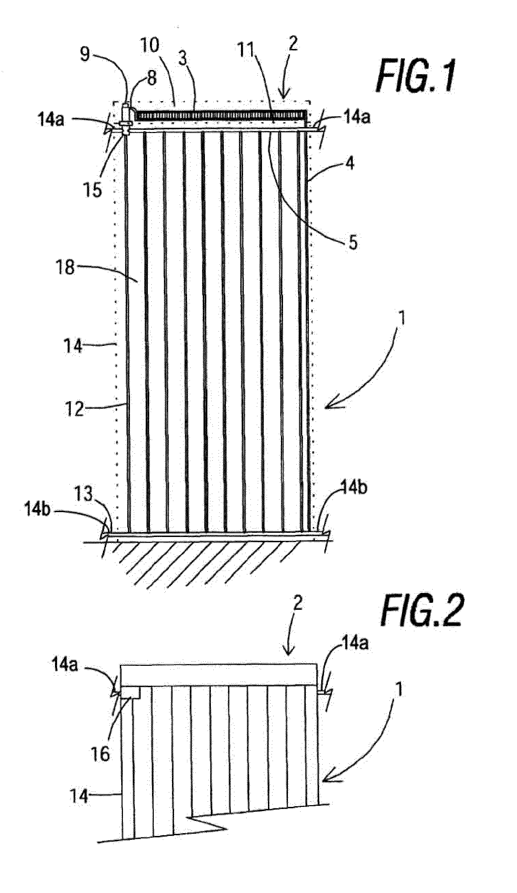

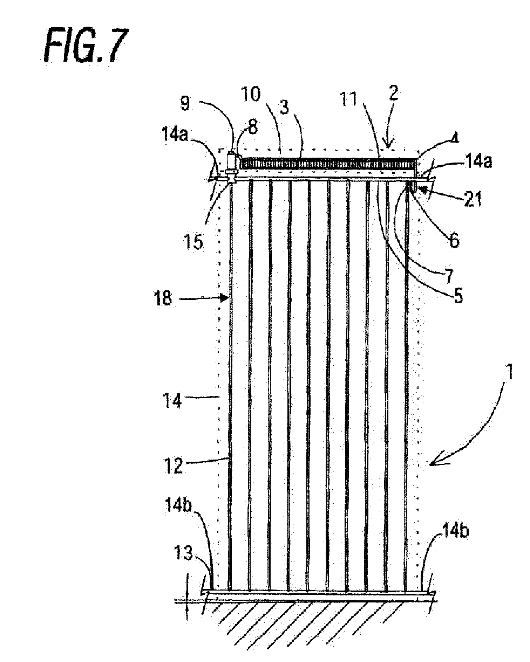

According to the invention, said upper pipe 5 for the heat-transfer fluid, the heat-sink device 2 and the thermostat bypass valve 15 are included in the same frame 14, with said upper horizontal pipe 5 and said heat-sink device 2 positioned adjacently. Preferably, the frame 14 houses also the absorber 18 with all its parallel vertical pipes 12, as it can be seen in particular in figures 1 and 7.

The thermal solar collector 1 comprises a return pipe 4 which connects said upper pipe 5 with said lower pipe 13.

Figure 1 shows a first embodiment of the thermal solar collector 1 of the invention, where the frame 14 is shown marked with dashed lines. In this case, optionally, a siphon (not shown in Figure 1) can be installed between the return pipe 4 and the lower pipe 13.

It can be seen in Figure 1 that the thermostat valve 15 and the heat exchanger 3 are connected by means of an inverted siphon 8 mounted at a higher level than the entry to the heat exchanger 3.

The thermostat valve 15 is, preferably, a valve with four paths and is thermally insulated in its upper part in order to avoid the small heat losses which take place under normal operating conditions. One of these paths is connected to the upper end of one of the parallel vertical pipes 12 of the thermal solar collector 1, with the other two paths connected to the upper pipe 5 and the last one ― to the heat exchanger 3 through the inverted siphon 8.

Thanks to this construction and the technical characteristics, when the heat-transfer fluid reaches a temperature inside the thermal solar collector 1, which is higher than a predetermined minimum value, for example 90°, a sensor element (not shown) of the thermostat valve 15 detects this temperature in a very reliable manner, since the three of the ports of the thermostat valve 15 are connected to the upper pipe 5 and to the upper end of one of the parallel vertical pipes 12 of the thermal solar collector 1, where the most elevated temperature in the set of the thermal solar collector 1 is reached. In this way, the thermostat valve 15 opens the upper path and permits the flow of the heat-transfer fluid towards the heat exchanger 3 through the inverted siphon 8.

Once the heat-transfer fluid has traversed the heat exchanger 3, reducing the temperature, it flows towards the lower pipe 13 and goes up through the parallel vertical pipes 12 of the thermal solar collector 1 until it reaches again the upper pipe 5, from where it continues towards the thermostat valve 15 and the heat exchanger 3, and so on successively.

In this way, unstable equilibrium of the system is established every time when the cooler and thus denser part of the heat-transfer fluid is in the heat exchanger 3, while the hotter and less dense part is inside the remaining pipes 5, 12, 13, which determine the absorber 18 of the thermal solar collector 1.

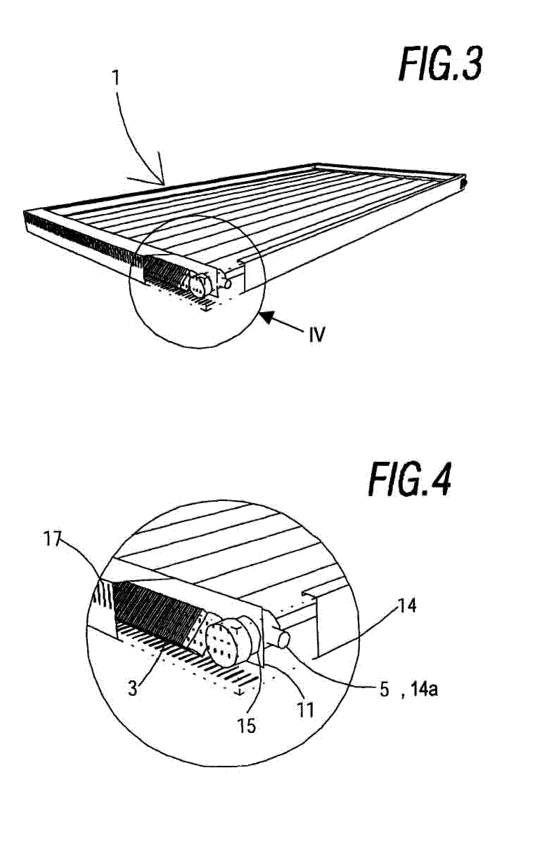

The heat-sink device 2 is preferably housed in a box 10, which can or can not be removed, separated from the rest of the thermal solar collector 1 by means of a partition wall 11, which forms an integral part of the frame 14. The box 10 can have several openings for ventilation 17 made on two of its faces (figures 3, 4 and 6). In figures 3 and 4, some elements have been omitted in order to improve the intelligibility, and discontinued lines have been used to represent the frame 14 and the box 10.

In order to achieve the elimination of the air and other gases from the heat-sink device 2, a deaerator 9 has been provided which can be manual or automatic and is installed at the most elevated point of the heat-sink device 2.

Figure 7 shows a second embodiment of the invention, in which the return pipe 4 is connected to the upper pipe 5.

Unlike the first embodiment, in this second embodiment, the heat-transfer fluid, after it traverses the heat exchanger 3, where its temperature is significantly reduced, returns to the upper pipe 5. The return pipe 4 comprises a portion 6 under the upper pipe 5, to which it is connected by means of a siphon 21, as well as an insulating sleeve 7. In this way, under normal operating conditions, the convection heat transfer between the upper pipe 5 and the heat exchanger 3 is interrupted by convection and conduction, respectively.

In order to provide the flow of the heat-transfer fluid through the thermostat valve 15, the heat exchanger 3, the upper pipe 5, the rest of the absorber 18 and again to the thermostat valve 15, the thermal solar collector 1 can be given a certain inclination with respect to the horizontal, in direction to the thermostat valve 15, preferably by at least one degree.

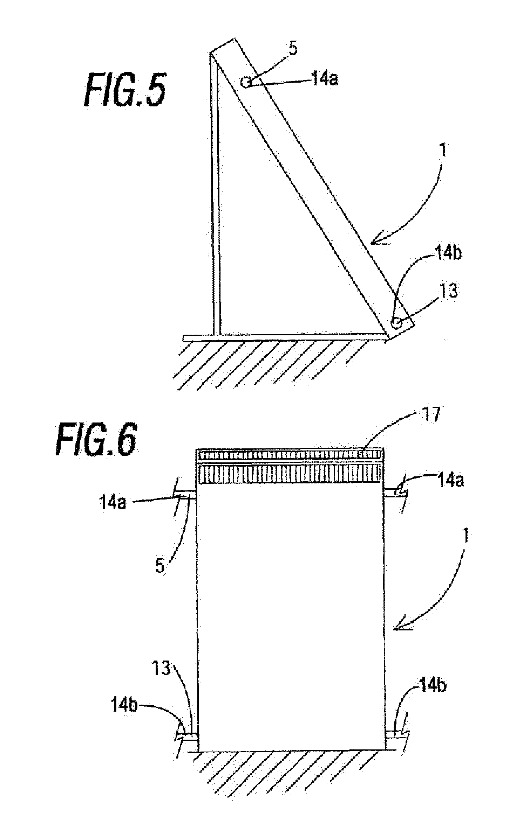

Figure 5 shows a lateral elevational view of the thermal solar collector 1, in which it can be noticed a maximal and optimal visual integration of the heat-sink device 2 in the set of the thermal solar collector 1.

In addition, due to the positioning of the heat exchanger 3 inside the box 10, the thin aluminum films of said heat exchanger 3 are protected against bad atmospheric conditions such as hail, snow, etc. Another advantage of said box 10 is that the users and the installers are protected against burns and other possible injuries.

In Figure 2, on can see an opaque portion 16 of the glass surface of the thermal solar collector 1, which coincides with the position of the thermostat valve 15, helping to impede the heating of the thermostat valve 15 by the action of the solar rays. This opaque portion 16 can consist, for example, of an adhesive, of chemical treatment performed on the glass surface, or of any other equivalent means. Thanks to these characteristics, the assembly is simplified, which permits the safe manipulation by the installer of the thermostat valve 15 without any risk of burns.

As a person skilled in the art would note, as a result of the special design of the thermal solar collector 1 of the invention, the transportation, manipulation and maintenance become significantly simplified with the corresponding advantages from economic point of view. In addition, the installer has the option, depending on the needs, to install a single thermal solar collector 1 or to connect several units to each other thus creating a battery or a field of collectors in a known manner. If a battery of collectors is installed, depending on the climatic region (strong or weak solar radiation) and the thermal capacity of the respective heat-sink device 2, the thermal solar collectors 1 of the invention can be combined with the heat-sink devices 2 according a broad range of possibilities. If the solar energy installation is located in a climatic region with a low level of solar radiation, the collectors 1 of the invention will be able to control the heat dissipation by themselves, without the need for heat sinks 2. In this way, the solar energy installation can be simplified considerably, which brings corresponding economic advantages.

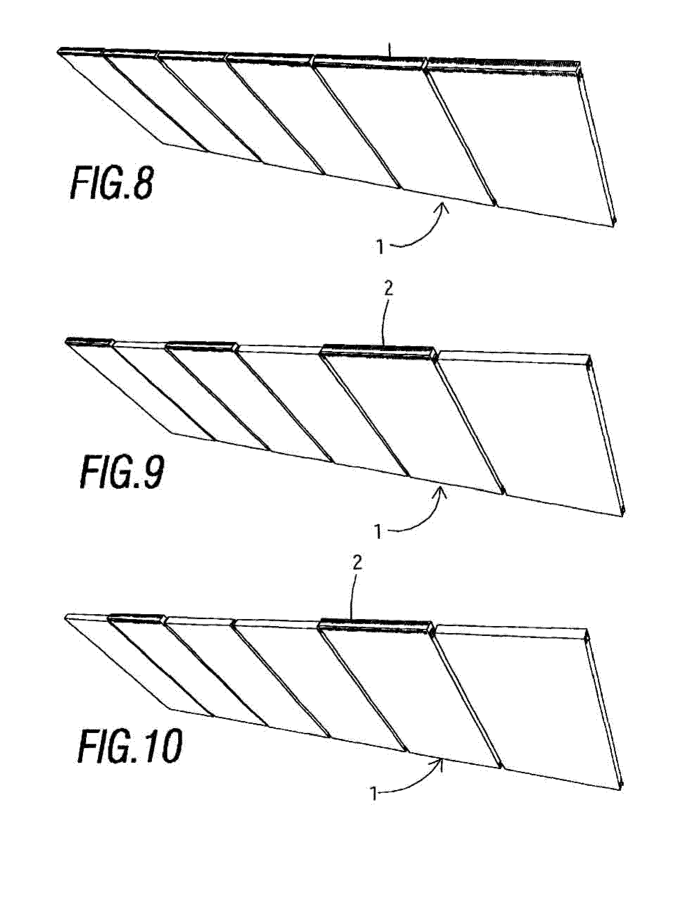

Figures 8, 9 and 10 show top perspective views of sets of thermal solar collectors 1, according to the invention, for a climatic region with strong, medium and low solar radiation, respectively.

And finally, it can be seen in the drawings that the input and output connectors 14a, 14b of the heat-transfer fluid, which have to be connected to the adjacent thermal solar collectors 1, are projecting from the frame 14.

The details, forms, dimensions and materials as well as the other accessory elements of the thermal solar collectors 1 of the invention can be replaced, with respect to those illustrated here, with other ones, which are technically equivalent, without leaving the scope of protection of the present invention defined in the following claims.

## Claims

1. Thermal solar collector (1) with a heat sink, which comprises
- an upper pipe (5) and a lower pipe (13) for the heat-transfer fluid,
- an absorber (18) consisting of multiple parallel vertical pipes (12) which connect said lower pipe (13) to said upper pipe (5), and
- a heat-sink device (2) equipped with a heat exchanger (3) connected to said upper pipe (5) by means of at least one thermostat bypass valve (15) to said heat-sink device (2) in order to avoid overheating, **characterized in that** the upper pipe (5) for the heat-transfer fluid, the heat-sink device (2) and the thermostat bypass valve (15) are located in the same frame (14), with said upper horizontal pipe (5) and said heat-sink device (2) are placed adjacently.

2. Thermal solar collector (1), according to claim 1, **characterized in that** the thermostat valve (15) and the heat exchanger (3) are connected by a siphon (8).

3. Thermal solar collector (1), according to claim 2, **characterized in that** said siphon is an inverted siphon (8).

4. Thermal solar collector (1), according to claim 1, **characterized in that** it comprises a return pipe (4) which connects said upper pipe (5) with said internal pipe (13).

5. Thermal solar collector (1), according to claim 4, **characterized in that** the return pipe (4) comprises an insulation sleeve (7) for interrupting the heat transfer by conduction between the heat exchanger (3) and the upper pipe (5).

6. Thermal solar collector (1), according to claim 1, **characterized in that** the thermostat valve (15) has four paths.

7. Thermal solar collector (1), according to claim 1, **characterized in that** one of the paths of the thermostat valve (15) is connected to the upper end of one of the parallel vertical pipes (12) of the collector.

8. Thermal solar collector (1), according to claim 1, **characterized in that** between the exit of the heat-sink device (2) and the upper pipe (5) comprises a thermal siphon (21).

9. Thermal solar collector (1), according to claim 1, **characterized in that** said thermostat valve (15) is calibrated to open the way for the heat-transfer fluid towards the heat exchanger (3) when the temperature of the heat-transfer fluid reaches a predetermined minimum value.

10. Thermal solar collector (1), according to claim 1, **characterized in that** it comprises an air deaerator (9) at the highest point of the heat-sink device (2).

11. Thermal solar collector (1), according to claim 1, **characterized in that** the heat-sink device (2) and the thermostat bypass valve (15) are housed in a box (10) separated from the rest of the collector by means of a partition wall (11).

12. Thermal solar collector (1), according to claim 11, **characterized in that** said box (10) has several openings for ventilation (17).

13. Thermal solar collector (1), according to claim 1, **characterized in that** the input and output connectors (14a, 14b) of the heat-transfer fluid, which have to be connected to the adjacent collectors, are projecting from the frame (14).
